# EUROPEAN PATENT APPLICATION

(11) **EP 2 362 695 A1**
(43) Date of publication of application: **31.08.2011**
(21) Application number: 10290069.3
(22) Date of filing: 12.02.2010
(51) Int. Cl.: H04W 48/18

(54) **Handling of mobility between access networks in a multi access communication system**

(71) Applicant: Alcatel Lucent, 75008 Paris (FR)
(72) Inventor: Orlandi, Barbara, 91620 Nozay (FR); El Mghazli, Yacine, 91620 Nozay (FR)
(74) Representative: El Manouni, Josiane

(57) **Abstract**

One object of the present invention, in an embodiment, is a method for the handling of mobility between access networks in a multi-access communication system, said method comprising a step of:
- providing operator's policy to control enforcement of mobility decisions by a User Equipment UE.

## Description

The present invention generally relates to communication networks and systems.

Detailed descriptions of communication networks and systems can be found in the literature, such as in particular in Technical Specifications published by standardisation bodies such as for example 3GPP (3^{rd} Generation Partnership Project). In such systems, a User Equipment UE (such as a mobile terminal) has access, via an Access Network, to a Core Network.

The present invention more particularly relates to multi access communication systems, such as for example Evolved Packet System (EPS) including Evolved Packet Core (EPC) that can be accessed by different Access Networks including 3GPP and non 3GPP Access Networks. Examples of 3GPP access technologies include GERAN, UTRAN, HSPA, E-UTRAN, ...etc. Examples of non 3GPP access technologies include WiFi, WiMAX, ...etc. In such heterogeneous environments, there is a need to facilitate mobility between access networks (also referred to as inter-system mobility), including handover between access networks as well as access network re-selection.

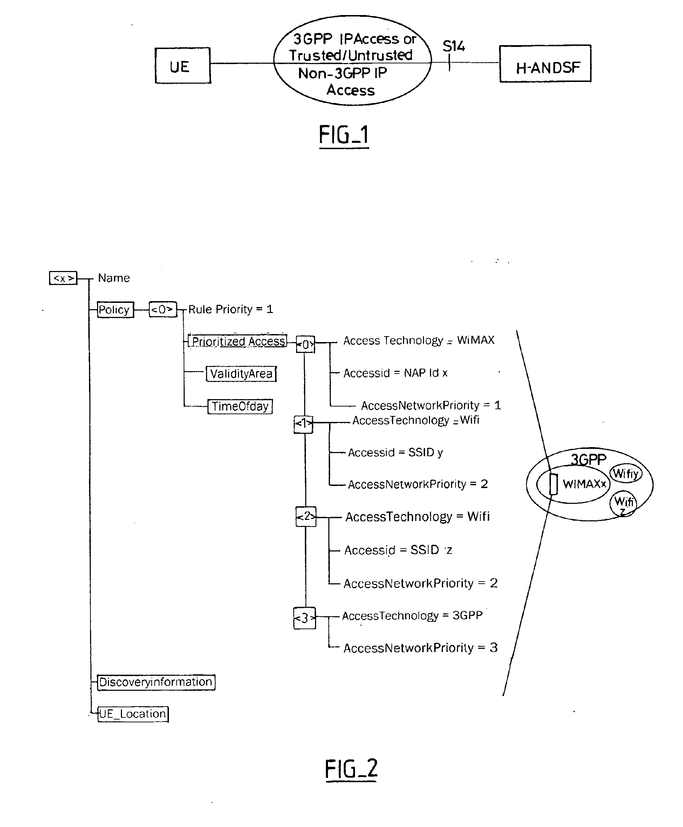

For example, an architecture for access network discovery and selection has been specified by 3GPP. This architecture is based on a network entity called Access Network Discovery and Selection Function ANDSF, as illustrated in figure 1 taken from 3GPP TS 23.402.

Management Object (MO) that can be used by the ANDSF and the UE is specified in 3GPP TS 24.312. The ANDSF MO is compatible with the OMA Device Management (DM) protocol specifications, and is defined using the OMA DM Device Description Framework (DDF). The ANDSF MO is used to manage intersystem mobility policy as well as access network discovery information stored in a UE supporting provisioning of such information from an ANDSF. The intersystem mobility policy information includes a set of one or more intersystem mobility policy rules. The rules have a number of conditions (e.g. current access technology and location) and a number of results (e.g. preferred access technology and restricted access technology).

There is a need to improve inter-system mobility, in particular in systems using architectures for access network discovery and selection, for example such as ANDSF architecture specified by 3GPP.

For example, as recognized by the inventors, there is a need for a more consistent and/or optimized behaviour of UEs when discovering that they are currently connected to an access type that is not an operator-preferred one or that is not allowed. For example, as recognized by the inventors, there is a need for a more consistent and/or optimized behaviour of UEs in such context, depending on the level of activity of the UE. For example, there may be a need that an inter-system handover be quickly performed from operator's perspective whereas the UE may actually wait for being idle before re-selecting another access type or access network; on the other hand, there may be no reason why an inter-system handover should be quickly performed from operator's perspective wheras it may actually be scheduled while the UE is currently active in a session, thus with a risk of service degradation.

Embodiments of the present invention in particular address such needs. More generally, it is an object of the present invention to improve inter-system mobility in such systems.

These and other objects are achieved, in one aspect of the present invention, in an embodiment, by a method for the handling of mobility between access networks in a multi-access communication system, said method comprising a step of:
- providing operator's policy to control enforcement of mobility decisions by a User Equipment UE.

These and other objects are achieved, in other aspects of the present invention, by entities such as User Equipment UE, and network entity such as for example management server (such as in particular ANDSF Server), comprising means for performing such method.

These and other objects of the present invention will become more apparent from the following description taken in conjunction with the accompanying drawings:
- Figure 1 recalls an architecture for access network discovery and selection, such as for example ANDSF as specified by 3GPP,
- Figure 2 is intended to illustrate an example of inter-system mobility policy information, according to ANDSF as currently specified by 3GPP,
- Figures 3 to 6 are intended to illustrate different examples of inter-system mobility policy information, according to different embodiments of the present invention.

As recalled above, 3GPP has specified an Access Network Discovery and Selection Function (ANDSF) allowing a mobile device to retrieve both policy (operator preferred access type) and available access networks based in particular on its location. When receiving initial ANDSF information or during a subsequent update, the UE will determine the policy rule that applies to its current location and time of day. It may discover that it is not connected to the operator-preferred access type and that it should perform a handover to the preferred access technology (if available).

As recognized by the inventors, there is a need to optimize UE behaviour when discovering that it is currently connected to an access type that is not the operator-preferred one and that it should perform a handover to the preferred access technology (if available). For example, the actual connection state or activity level (such as active or idle) of the UE is currently not taken into account. However, depending on the connection state of the UE, it may or not be desirable to select or perform a handover to another access network type.

As recalled above, Management Objects (MO) that can be used by the ANDSF and the UE are specified in 3GPP TS 24.312.

Figure 2 is intended to illustrate an example of inter-system mobility policy information, according to ANDSF MO as currently specified by 3GPP.

In the example illustrated in figure 2, a UE is connected to a cellular 3GPP network and has retrieved policies from the ANDSF server. The policies indicate that based on its location and the time of day, the preferred access types are (sorted by order of priority): WiMAX access NAP-ID x, Wifi Access SSID y, Wifi Access SSID z, 3GPP. So, in this example, it turns out that the UE is connected to the least-preferred network from an operator point of view, and therefore the UE should perform procedures for discovering and reselecting a higher priority access network.

Figure 2 shows an example of inter-system mobility policy information currently received by the UE from the ANDSF structure. This information has a tree-like structure, including in particular a "Policy" node and, currently, following nodes under the "Policy" node: "RulePriority", "PrioritzedAccess", "ValidityArea" and "TimeOfDay".

As recognized by the inventors, there is a need to improve the inter-system mobility policy information received by the UE from the ANDSF structure, in particular to improve the UE behaviour when discovering that it is currently connected to an access type that is not the operator-preferred one.

In an embodiment, it is proposed that the inter-system mobility policy identifies whether a preference is:
- Absolute: the UE is to perform handover to the preferred access technology type / access network identifier whatever it is doing (regardless of whether it is active or idle)
- Required: the UE is to wait for being idle before reselecting another access technology type / access network.
- Indicative: the UE is allowed to stay on its current access even though it is not the preferred one among those that are available.

Alternatively, it is proposed that the inter-system mobility policy only identifies whether a preference is:
- Absolute: the UE is to perform handover to the preferred access technology type / access network identifier whatever it is doing (regardless of whether it is active or idle)
- Required: the UE is to wait for being idle before reselecting another access technology type / access network.

The definition of "active" and "idle" activity levels may be access-network specific. In general, a UE is considered to be "active" when it has active communication bearers with the network for transmitting / receiving user data. When the UE has no active communication bearers for user data transmission / reception, it is considered to be "idle". For example, for the case of E-UTRAN access, a UE is "active" when it is in ECM-CONNECTED state, while it is "idle" when it is in ECM-IDLE state.

In an embodiment, it is proposed that if the UE has access network discovery information and inter-system mobility policies valid for its present location, which indicate that there is an access network in its vicinity with higher priority than the current access network, the UE should perform procedures for discovering and reselecting the higher priority access network, if this is allowed by user preferences according to the level of preference stated in the inter-system mobility policy, such as (Absolute, Required) or (Absolute, Required, Indicative).

In an embodiment, it is proposed to use the ANDSF to provide inside the Policy node (which already contains RulePriority, ValidityArea, TimeOfDay, PrioritizedAccess nodes) a RuleEnforcement node with for instance the following possible values: Absolute, Required or alternatively Absolute, Required, Indicative. In other words, as compared to figure 2, it is proposed to have received at the same time, in the inter-system mobility policy information, an indication on the rule enforcement.

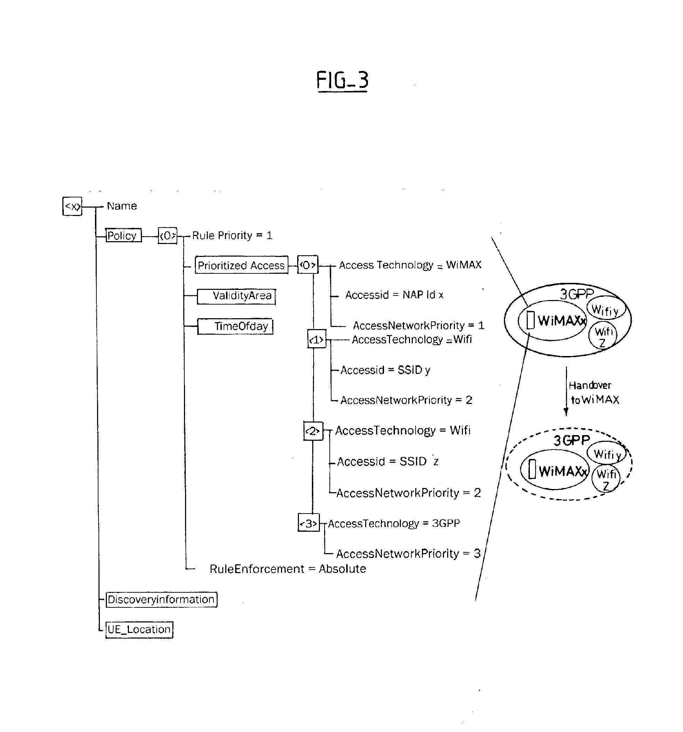

Figures 3 to 6 are intended to illustrate different possible values for the RuleEnforcement node, according to different embodiments of the present invention.

In figure 3 is illustrated an example with the RuleEnforcement set to "Absolute". Based on that indication, the UE performs handover to the WiMAX access (the way the handover is performed is not within the scope of the present invention and will therefore not be described in more detail; for example this may include mobile or network-initiated handover).

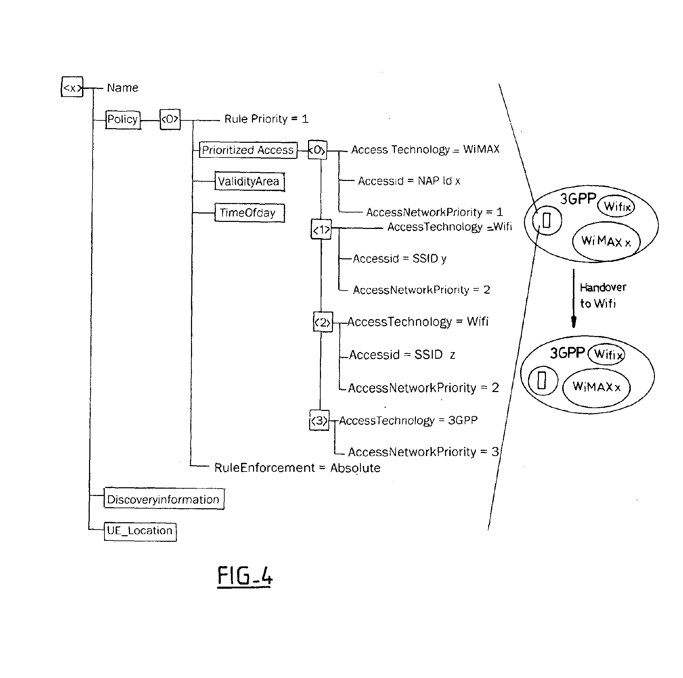

Figure 4 is the same kind of case as figure 3 except that the preferred access (WiMAX) is not available so the UE takes the next best.

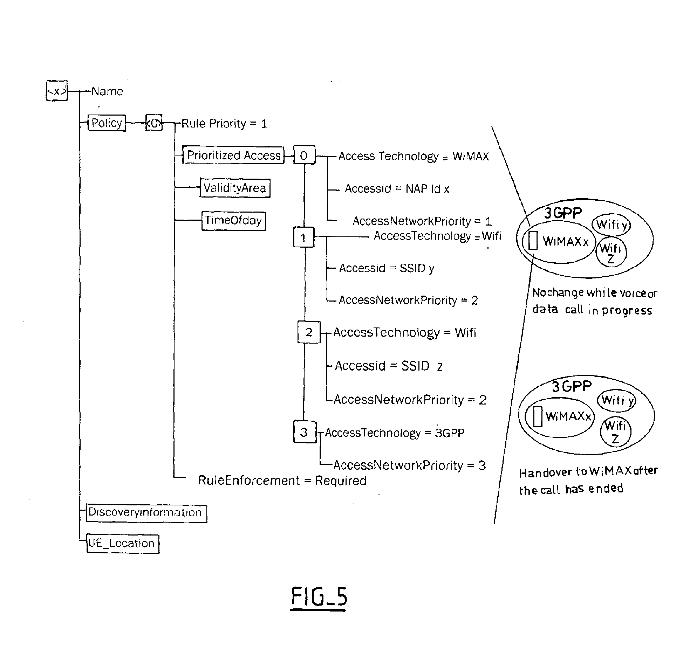

In figure 5 is illustrated an example with the RuleEnforcement set to "Required". Based on that indication, the UE will finish its call/connection before reselecting another access.

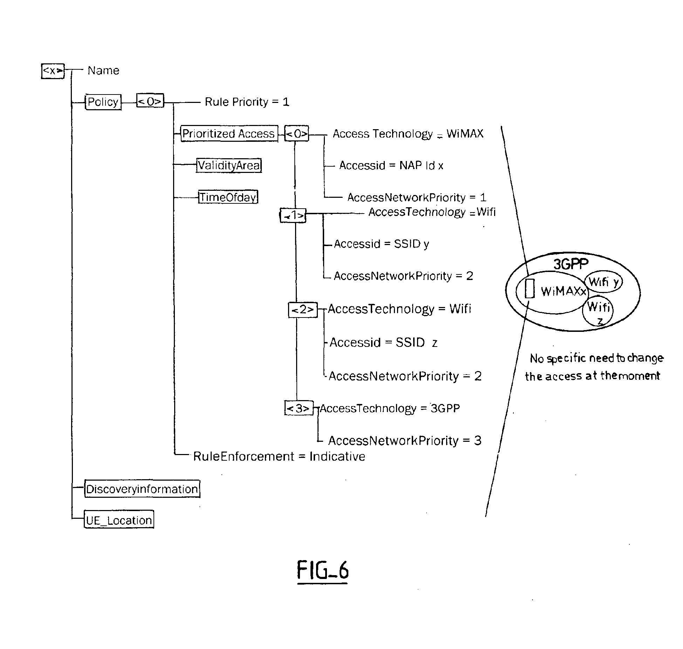

In figure 6 is illustrated an example with the RuleEnforcement set to "Indicative". Based on that indication, the UE is allowed to stay on its current access even though it is not the preferred one among those that are available.

In other embodiments, cooperation between the UE and the network could be provided in making inter-system mobility decisions. For example, the UE and the network could exchange signalling including:
- information signalling (including for example discovery information sent by an information server to the UE),
- event signalling (including for example measurement reports sent by the UE to a network entity),
- command signalling (including for example handover commands sent by a network entity to the UE).

In an embodiment, such signalling (such as for example command signalling) could include indication on Rule Enforcement such as as explained above.

In one aspect, in an embodiment, the present invention provides a method for the handling of mobility between access networks in a multi-access communication system, said method comprising a step of:
- providing operator's policy to control enforcement of mobility decisions by a User Equipment UE.

In an embodiment, said method comprises a step of:
- providing operator's policy to control enforcement of mobility decisions by a User Equipment UE based on activity level of the UE.

In an embodiment, said method comprises the steps of:
- providing first operator's policy to control mobility decisions made by a User Equipment UE,
- providing second operator's policy to control enforcement by the UE of said mobility decisions.

In an embodiment, said method comprises a step of:
- a network entity providing policy information to a User Equipment UE.
   In an embodiment, said method comprises a step of:
- the UE storing operator's policy information provided to it by a network entity.

In an embodiment, said method comprises a step of:
- a network entity retrieving policy information stored in a User Equipment UE.

In an embodiment, said method comprises a step of:
- the UE performing mobility procedures according to operator's policy to control enforcement of mobility decisions by the UE.

In an embodiment, operator's policy information comprises:
- information indicating that the UE is to perform handover to a preferred access technology type / access network identifier regardless of whether it is active or idle.

In an embodiment, operator's policy information comprises:
- information indicating that the UE is to wait for being idle before reselecting another access technology type / access network.

In an embodiment, operator's policy information comprises:
- information indicating that the UE is allowed to stay on its current access even though it is not the preferred one among those that are available.

In another aspect, in an embodiment, the present invention provides a User Equipment, comprising, for the handling of mobility between access networks in a multi access communication system:
- means for receiving from a network entity operator's policy information to control enforcement of mobility decisions by the UE.

In an embodiment, the User equipment UE comprises:
- means for receiving from a network entity operator's policy information to control enforcement of mobility decisions by the UE based on activity level of the UE.

In an embodiment, the User equipment UE comprises:
- means for receiving from a network entity, first operator's policy information to control mobility decisions made by the UE and second operator's policy information to control enforcement by the UE of said mobility decisions.

In another aspect, in an embodiment, the present invention provides a User Equipment, comprising, for the handling of mobility between access networks in a multi access communication system:
- means for performing mobility procedures, according to operator's policy to control enforcement of mobility decisions by the UE.

In an embodiment, the User equipment UE comprises:
- means for performing mobility procedures according to operator's policy to control enforcement of mobility decisions by the UE based on activity level of the UE.

In another aspect, in an embodiment, the present invention provides a network entity such as for example management server, comprising, for the handling of mobility in a multi access communication system:
- means for providing to a User Equipment UE operator's policy information to control enforcement of mobility decisions by the UE.

In an embodiment, the network entity comprises:
- means for providing to a User Equipment UE operator's policy information to control enforcement of mobility decisions by the UE based on activity level of the UE.

In an embodiment, the network entity comprises:
- means for providing to a User Equipment UE first operator's policy information to control mobility decisions made by the UE and second operator's policy information to control enforcement by the UE of said mobility decisions.

In an embodiment, the network entity comprises:
- means for retrieving policy information stored in a User Equipment UE.
   In an embodiment, the network entity comprises:
- means for retrieving from a User Equipment UE first operator's policy information to control mobility deciison made by the UE and second operator's policy information to control enforcement by the UE of said mobility decisions.

The detailed implementation of the above-mentioned means does not raise any special problem for a person skilled in the art, and therefore such means do not need to be more fully disclosed than has been made above, by their function, for a person skilled in the art.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

## Claims

1. A method for the handling of mobility between access networks in a multi-access communication system, said method comprising a step of:
- providing operator's policy to control enforcement of mobility decisions by a User Equipment UE.

2. A method according to claim 1, comprising a step of:
- providing operator's policy to control enforcement of mobility decisions by a User Equipment UE based on activity level of the UE.

3. A method according to claim 1 or 2, comprising the steps of:
- providing first operator's policy to control mobility decisions made by a User Equipment UE,
- providing second operator's policy to control enforcement by the UE of said mobility decisions.

4. A method according to any of claims 1 to 3, comprising a step of:
- a network entity providing policy information to a User Equipment UE.

5. A method according to any of claims 1 to 4, comprising a step of:
- the UE storing operator's policy information provided to it by a network entity.

6. A method according to any of claims 1 to 5, comprising a step of:
- a network entity retrieving policy information stored in a User Equipment UE.

7. A method according to any of claims 1 to 6, comprising a step of:
- the UE performing mobility procedures according to operator's policy to control enforcement of mobility decisions by the UE.

8. A method according to any of claims 1 to 7, wherein operator's policy information comprises:
- information indicating that the UE is to perform handover to a preferred access technology type / access network identifier regardless of whether it is active or idle.

9. A method according to any of claims 1 to 7, wherein operator's policy information comprises:
- information indicating that the UE is to wait for being idle before reselecting another access technology type / access network.

10. A method according to any of claims 1 to 7, wherein operator's policy information comprises:
- information indicating that the UE is allowed to stay on its current access even though it is not the preferred one among those that are available.

11. A User equipment UE, comprising, for the handling of mobility between access networks in a multi access communication system:
- means for receiving from a network entity operator's policy information to control enforcement of mobility decisions by the UE.

12. A User equipment UE according to claim 11, comprising:
- means for receiving from a network entity operator's policy information to control enforcement of mobility decisions by the UE based on activity level of the UE.

13. A User equipment UE according to claim 11 or 12, comprising:
- means for receiving from a network entity, first operator's policy information to control mobility decisions made by the UE and second operator's policy information to control enforcement by the UE of said mobility decisions.

14. A User equipment UE, comprising, for the handling of mobility between access networks in a multi access communication system:
- means for performing mobility procedures according to operator's policy to control enforcement of mobility decisions by the UE.

15. A User equipment UE according to claim 14, comprising:
- means for performing mobility procedures according to operator's policy to control enforcement of mobility decisions by the UE based on activity level of the UE.

16. A network entity, comprising, for the handling of mobility between access networks in a multi access communication system:
- means for providing to a User Equipment UE operator's policy information to control enforcement of mobility decisions by the UE.

17. A network entity according to claim 16, comprising:
- means for providing to a User Equipment UE operator's policy information to control enforcement of mobility decisions by the UE based on activity level of the UE.

18. A network entity according to claim 16 or 17, comprising:
- means for providing to a User Equipment UE first operator's policy information to control mobility decisions made by the UE and second operator's policy information to control enforcement by the UE of said mobility decisions.

19. A network entity according to any of claims 16 to 18, comprising:
- means for retrieving policy information stored in a User Equipment UE.

20. A network entity according to any of claims 16 to 19, comprising:
- means for retrieving from a User Equipment UE first operator's policy information to control mobility deciison made by the UE and second operator's policy information to control enforcement by the UE of said mobility decisions.
